# EUROPEAN PATENT APPLICATION

(11) **EP 4 152 656 A1**
(43) Date of publication of application: **22.03.2023**
(21) Application number: 21306275.5
(22) Date of filing: 15.09.2021
(51) Int. Cl.: H04J 3/06

(54) **METHOD FOR SYNCHRONIZATION OF TIMESTAMPED DATA**

(71) Applicant: Feetme, 75019 Paris (FR)
(72) Inventor: CAVAN, Quentin, 75019 Paris (FR); LY TANG, Guillaume, 75019 Paris (FR)
(74) Representative: Icosa

(57) **Abstract**

The present invention relates to a method of acquiring timestamped data and timing data by at least two tied devices wherein each device continuously acquires sensor data; broadcasts its internal clock data and acquires a timing data.

## Description

### FIELD OF INVENTION

The present invention relates to a method for generating synchronized timestamped data. More precisely, the present invention relates to a method for acquiring timestamped data and timing data and a method for synchronization of the timestamped data.

### BACKGROUND OF INVENTION

In various fields, such as medical fields or sport training, it is often desirable to acquire several types of data during activity of a person: physiological signal like heartbeats or temperature for instance; and motion data like speed or posture. To do so, data collected by the sensors must be accurately synchronized. This is especially relevant for motion analysis, in which signal from sensors located on different places on the body of the person are used. Indeed, a typical timescale for motion analysis is 10 milliseconds. For instance, using sensors located in insoles for gait analysis requires a synchronization between sensors much more accurate than the duration of stance phase to determine duration of double support or to monitor plantar pressure of both feet before toe-off or just after heel-strike.

However, known synchronization methods are not satisfactory.

Indeed, several known methods save timestamped data in a memory embodied in the sensor devices during the whole measuring session. After the measuring session, the timestamped data are sent to an analyzer to perform synchronization. However, timestamped data are subject to clock drifting. This phenomenon is due to the fact that two or more clocks do not run at exactly the same rate leading to a gradual desynchronization between the clocks and divergence between the timestamped data.

To solve this problem, several known methods perform regular synchronization between the clocks during the measuring session. For instance, the sensing devices are continuously connected to the analyzer in order to regularly transmit and synchronize the timestamped data. However, the continuous connection between the sensing device and the analyzer implies a large energy consumption leading to a limited autonomy. Moreover, regularly transmitting data to an analyzer leads to systems which are less reliable. Indeed, if the analyzer breaks down, the whole sensor data are lost. Alternatively, sensing devices regularly connect to a central device where they get a reference time in order to update their own internal clocks. However, regular connections to a central device implies regular identification steps which also lead to a large energy consumption and thus a limited autonomy. And failure of the central device also leads to loss of synchronization.

A purpose of the invention is to provide a synchronization method that is more precise, more reliable and less energy consuming.

### SUMMARY

To this end, the present invention relates to a method of acquiring timestamped data and timing data by at least two devices wherein:
- The devices are tied;
- Each device comprises an internal clock, an identifier, a predetermined synchronization frequency, a memory, a wireless connection module and at least one sensor;
- Each device continuously acquires sensor data and, through its wireless connection module, continuously broadcasts its internal clock data and its identifier;
- At its predetermined synchronization frequency, each device acquires a timing data, said acquisition by each device comprising the steps of:
   i. Scanning through its wireless connection module to receive internal clock data and identifier broadcasted by at least one of the other devices; and
   ii. Storing in its memory the timing data comprising its own internal clock data as well as the internal clock data and identifier received.

Indeed, the devices are tied together in order to share tagged data and information between them without need of any external device or central device. This is advantageous because it leads to a system which requires less energy consumption and is more reliable. The low energy consumption of this method allows the continuous acquisition of the sensor data during a long time range leading to a more precise data analysis.

According to other advantageous aspects of the invention, the method further includes one of the following features, taken alone or in any possible combination:
- The continuous broadcasting is periodic and the frequency of broadcasting is ranging from 1 Hz to 25 Hz;
- Each device comprises the same predetermined synchronization frequency, the timing data being acquired asynchronously by each device;
- The predetermined synchronization frequency is larger than or equal to A/20, where A is the largest internal clock drifting rate of all devices;
- The predetermined synchronization frequency ranges between 1 and 6 hour⁻¹;
- The duration of the scanning step of each device is larger than or equal to the period of broadcasting of at least one of the other devices, preferably the duration of the scanning step is 30 seconds;
- The scanning step comprises at least one scan window, the duration of each scan window being larger than or equal to the period of broadcasting of at least one of the other devices, and each scan window being successively performed until at least one of the other devices is found;
- The at least two devices comprise at least one of: an accelerometer, a pressure sensor, a magnetometer, a gyroscope, an electrocardiogram sensor, an oximeter, an electroencephalogram sensor, a temperature sensor, a force sensor, an arterial blood flow sensor, an atmospheric pressure sensor, a plantar pressure sensor, a glucose level sensor, a posture sensor, a balance sensor, a heartbeat sensor and/or a telemetry sensor;
- The acquisition of sensor data lasts at least 10 hours, preferably 24 hours, more preferably at least 48 hours;
- The devices are wearable devices.

According to another advantageous aspect of the invention, the wireless connection module is a Bluetooth low energy system.

This is advantageous because the Bluetooth low energy system has very low energy consumption compared to other connection systems.

According to another advantageous aspect of the invention, the at least two devices comprise two insoles.

This is advantageous because the insoles allow the analysis of several parameters of the gait with a very high precision by measuring any parameter related to the feet and gait of the user.

The invention also relates to a method of synchronizing timestamped data, the method comprising:
- Tying at least two devices to each other;
- Acquiring timestamped data and timing data by said tied devices according to the method disclosed above;
- Transmitting timestamped data and timing data from each wearable device to a collector device; and
- Synchronizing the transmitted timestamped data from all devices in the collector device, using timing data of all devices.

According to another advantageous aspect of the invention, tying the at least two devices to each other is performed by sending, to each device, an identifier corresponding to each of the other device, the identifier uniquely identifying each device. This is advantageous because the tying step allows each device to only receive data broadcasted by the device(s) to which said device is tied and to determine, for each received data, the device which broadcasts said data.

According to another advantageous aspect of the invention, the method comprises, before tying the at least two devices to each other, assigning a unique identifier to each device. This is advantageous because the identifier allows to identify each internal clock data broadcasted.

### DEFINITIONS

In the present invention, the following terms have the following meanings:

**"Clock drift":** refers to the fact that two or more clocks do not run at exactly the same rate leading to a gradual desynchronization between the clocks. This phenomenon is characterized by a clock drifting rate expressed in ppm (part per million) where 1 ppm is equivalent to a drift of 1 microsecond per second.

**"Tied devices":** refers to at least two devices whose identifiers are shared allowing, for example, tagged information exchange between them. In other words, each device knows the identifier of other tied devices.

**"Timestamped data":** refers to data characterized by temporal information identifying the time when the data is measured.

**"Timing data":** refers to a data couple comprising a temporal data, such as, for example, the internal time of a device, and an identifier identifying said device.

### BRIEF DESCRIPTION OF THE DRAWINGS

**Figure 1** is an organizational chart showing a method of acquiring timestamped data and timing data according to the invention.
**Figure 2** is an organizational chart showing a method of synchronizing timestamped data according to the invention.
**Figure 3** is an organizational chart showing one embodiment of the method of synchronizing timestamped data according to the invention wherein the tying step is performed by means of a collector device and wherein the transmission timestamped data and timing data is performed synchronously for all devices.
**Figure 4** is an organizational chart showing one embodiment of the method of synchronizing timestamped data according to the invention wherein the acquisition of timestamped data and timing data is continuous, and wherein the transmission of timestamped data and timing data and the synchronization of the timestamped data are performed repeatedly during the acquisition of timestamped data and timing data.

### DETAILED DESCRIPTION

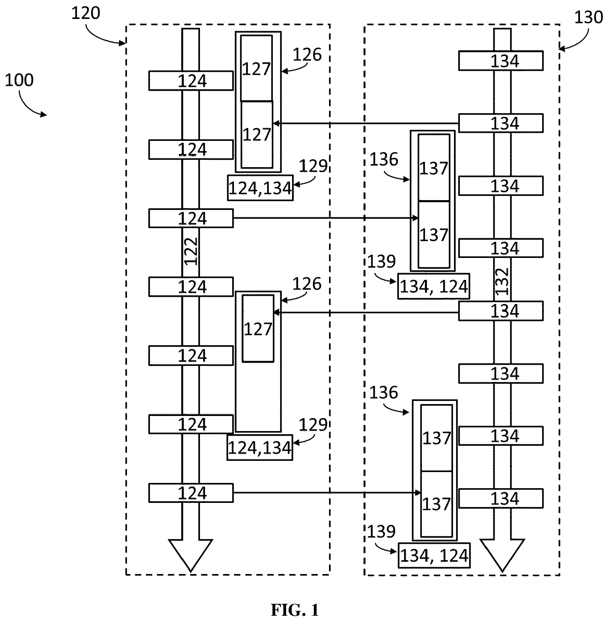

A method 100 according to the present invention is illustrated on figure 1. The method 100 acquires timestamped data and timing data by at least two devices (120, 130).

At least one of the devices may be a wearable device. In an embodiment, the at least two devices (120, 130) comprise two insoles (one insole per device).

Each of the devices (120, 130) comprises at least an internal clock, an identifier, a memory, at least one sensor, a predetermined synchronization frequency (SF2, SF3), and a wireless connection module.

The internal clock is a timing module, such as a clock, defining the time frame of the device comprising it.

The identifier is an information (such as a number or a name) assigned to a device allowing to uniquely identify the device among a plurality of other devices.

The memory may be any processor-readable medium such as, e.g., an integrated circuit, a hard disk, a flash memory, a RAM (Random-Access Memory) or a ROM (Read-Only Memory).

The at least one sensor may be any type of sensor allowing to detect and measure changes of physical quantities. The type of sensors may be, but is not limited to, an accelerometer, a pressure sensor, a magnetometer, a gyroscope, an electrocardiogram sensor, an oximeter, an electroencephalogram sensor, a temperature sensor, a force sensor, an arterial blood flow sensor, an atmospheric pressure sensor, a plantar pressure sensor, a glucose level sensor, a heartbeat sensor, a telemetry sensor, a posture sensor, and/or a balance sensor. Each device (120, 130) may comprise more than one type of sensors, in particular, each device (120, 130) may comprise a pressure sensor, an accelerometer and a gyroscope - accelerometer and gyroscope being optionally comprised in a single component.

As shown in figure 1, each device (120, 130) continuously acquires sensor data (122, 132) from the sensors. The sensor data (122, 132) may be recorded in the memory comprised in the corresponding device. The method 100 of the present invention is advantageous because the continuous acquisition of sensor data (122, 132) may last 10 hours, 24 hours, 48 hours or even three to ten days thanks to the low energy consumption of said method. This allows a very precise monitoring during a large time range. For example, the gait may be analyzed during the whole day to compare the gait characteristics at the beginning of the day (after a night at rest) and at the end of the day or even between several days.

The sensor data (122, 132) are timestamped data meaning that they are characterized by an information identifying the time at which each data was measured by the sensor. This information may be an internal time determined by the internal clock of the device comprising the sensor.

Each device (120, 130) also continuously broadcasts its internal clock data and its identifier (124, 134) through its wireless connection module. Advantageously, the wireless connection module is a Bluetooth low energy (BLE) system. This is advantageous because said system has very low energy consumption compared to other connection systems. Alternatively, the wireless connection module may be any other module such as, but not limited to, a Wireless Fidelity (WIFI) system, an Advanced and Adaptive Network Technology (ANT) or a Zigbee protocol.

As shown in figure 1, the broadcast may be performed by regularly advertising data packets (124, 134), separated by advertising intervals. In an advantageous embodiment, one data packet comprises one internal clock data and the identifier of the broadcasting device. This is advantageous because the identifier allows to identify each internal clock data broadcasted. The data packets may be sent periodically or irregularly. The data packets may be sent simultaneously or asynchronously between each device. In an embodiment, the data packets are sent periodically and the frequency of broadcasting is ranging from 1 Hz to 25 Hz. Even more preferably, the data packets are sent periodically and the frequency of broadcasting is ranging from 4 Hz to 8 Hz.

In the method 100, the at least two devices (120, 130) need to be tied to each other. Tying the devices (120, 130) to each other may be performed by sending, to each device, the identifier corresponding to each of the other devices to be tied to. The tying step may be performed previously, *i.e.,* before performing the method 100. This step may be the tying step 243 which is part of the method 200 disclosed hereafter.

The tying step allows each device to only receive data broadcasted by the device(s) to which said device is tied and to determine, for each received data, the device which broadcasts said data. As long as the identifier of the devices and the number of the devices used in the method 100 do not change, the tying step needs to be performed only once. The tying step may be performed before or during a measurement session. In an advantageous embodiment, the tying step is performed before the measurement session. This is advantageous because it allows to correct the overall measured data from the clock drifting. Indeed, as explained above, clock drifting is due to the fact that two or more clocks do not run at exactly the same rate leading to a gradual desynchronization between the clocks and a divergence between the timestamped data. By tying the devices before the measurement session, the clock drifting may be compensated by comparing the internal clock data broadcasted by each device during the whole measuring session and therefore to correct the drift for the overall sensor data (122, 132).

One of the main advantages of the invention is that the devices are tied together in order to share tagged data and information between them without need of any external device or central device. This is advantageous because it leads to a system which requires less energy consumption and is more reliable. Indeed, if one of the devices breaks down, only sensor data of the said device are lost while sensor data of the other device(s) are kept safe in their own memory. Moreover, the remaining devices still continuously broadcast their internal clock data allowing further synchronization of timestamped data which is not possible if the external device or central device breaks down.

At its predetermined synchronization frequency (SF2, SF3), each device (120, 130) scans (126, 136) through its wireless connection module to receive the data broadcasted by at least one of the other devices (134, 124) - for the sake of simplicity, broadcasting step and data broadcasted are represented by the same reference: 124, 134. Considering a desired maximum clock drift of B (expressed in time unit) and a largest drifting rate A of all devices (expressed in ppm), the predetermined synchronization frequency (SF2, SF3) may be larger than or equal to A/(2B). In the preferred embodiment, the predetermined synchronization frequency (SF2, SF3) ranges between 1 and 6 hour⁻¹. For instance, each device (120, 130) may comprise the same predetermined synchronization frequency (SF2 and SF3 are equal) but the scanning step is performed asynchronously by each device. For example, considering two devices with a predetermined synchronization frequency SF2=SF3=2 hour⁻¹ (i.e., one scan every 30 minutes) and a largest drifting rate A=20 ppm (corresponding to a drift of 20 microseconds per second), the maximum drifting point between the two devices is at 15 minutes after the end of a scan (*i.e.,* at the mid-time between two scans) with a maximum drift B=18 milliseconds.

In one embodiment, in order to receive at least one broadcasted data packet during each scan, the duration of the scanning step (126, 136) of each device is larger than or equal to the advertising intervals of at least one of the other devices. In the preferred embodiment, the duration of the scanning step (126, 136) is ranging between 10 seconds and 1 minute.

In the embodiment represented in figure 1, the scanning step (126, 136) comprises at least one scan window (127, 137). The duration of each scan window (127, 137) is shorter or equal to the duration of the scanning step (126, 136). The duration of each scan window (127, 137) may be larger than or equal to the advertising intervals of at least one of the other devices. In the preferred embodiment, the duration of each scan window (127, 137) is ranging between 125 milliseconds and 250 milliseconds. Each scan window (127, 137) may be successively performed until at least one of the other devices is found (and thus its broadcasted data are received) or until the scanning step (126, 136) is ended. Optionally, the scanning step (126, 136) is ended when at least one of the other devices is found (and thus its broadcasted data are received). Advantageously, the scanning step (126, 136) is ended when all the other devices are found. This is advantageous because this reduces the energy consumption by the scanning step.

The received data are then stored (129, 139) in the memory of the scanning device. The memory may be the same or the same type as used to save sensor data (122, 132). The storing step (129, 139) may be performed at the end of the scanning step (126, 136). Alternatively, the storing step (129, 139) may be performed at the end of the scanning window (127, 137) which received the data. The received internal clock data and identifier are saved together with the internal clock data of the scanning device corresponding to the time of the reception of the received data thus defining a timing data.

The transmission time of the data between the devices may be determined during the manufacturing of the devices and taken into account by various methods. The known transmission time may be automatically added to the internal clock data of each device before broadcasting of their internal clock data. The storing step may comprise a correction step to correct the transmission time from the timing data. In this alternative embodiment, the transmission time of each device is broadcasted along with their internal clock data and identifier and the transmission time is subtracted from the internal clock data of the scanning device or added to the received internal clock data before storing them. The transmission times may be corrected after performing the method 100. Alternatively, the transmission time may be simply neglected if it is much less than desired precision of synchronization. Transmission times shorter than 5 ms may be neglected.

In one embodiment, the timing data are arranged in a matrix. The number of columns of the matrix corresponds to the number of tied devices. One column of the matrix records the internal clock data of the scanning device (124, 134) whereas the other column(s) record the internal clock data of the other tied device(s) (134, 124). When a broadcasted data packet is received, one line is appended in the matrix; this line contains, in the column dedicated to the scanning device, the internal time of the scanning device corresponding to the time at which the broadcasted data packet was received, and, in the column dedicated to the device corresponding to the received identifier, the internal time received from the broadcasting device.

For example, considering two tied devices, the matrix is defined by two columns, the first one being dedicated to the scanning device. Considering the scanning device 120 and the broadcasting device 130, the scanning step 126 allows to receive, by the device 120, the broadcasted data packet 134. The timing data are saved as a new line of the matrix. This line contains, in the first column, the internal time of the scanning device 120, corresponding to the time of the reception of the data packet 134, and, in the second column, the broadcasted internal time of the broadcasting device 130.

The method 100 may be performed continuously by successively repeating the steps of scanning (126, 136) and storing (129, 139) during the whole acquisition of the sensor data (122, 132).

Optionally, part of the sensor data analysis is performed by each device. This part of the analysis may be, for example, filtering the sensing data or computing physical parameters from the sensing data. Using the method 100 is therefore advantageous because of the very low energy consumption by the broadcasting which leads to optimum allocation of energy for the data analysis. The method 100 thus allows to save Central Processing Unit time for the data analysis.

The method 100 is advantageous, for example, for the analysis of the gait because of the very low energy consumption leading to the possibility to analyze the gait during a long time-range in order to deduce gait parameters which are more meaningful than a measure over a few steps. In this embodiment, the devices are wearable devices such as garment (like a t-shirt, socks, gloves), a footwear (for instance an insole), or a strap fitted to the chest, hip, knee, ankle, shoulder or elbow. For the analysis of the gait, plantar pressure distribution, center of pressure trajectory and gait parameters (such as, stride length, step length, stride velocity, cadence, distance walked, strides number, gait cycle phases: stance and swing, stride duration, load) are especially relevant to be measured. Therefore, wearable sensors in the form of pressure sensitive insoles may be advantageous. Pressure sensitive insoles may comprise a plurality of capacitive pressure cells. Capacitive pressure cells may comprise a thin sheet of deformable dielectric material placed between two electrodes. Indeed, the value of the capacitance C of a capacitive pressure cell can be determined as a function of the thickness L of the dielectric sheet of the capacitive pressure cells, the surface S of the upper electrode and the lower electrode of the capacitive pressure cells and the dielectric constant ε of the material between the electrodes by the following equation: C=εS/L. Consequently, when the thickness L of the dielectric sheet of the capacitive pressure cells is changed, the capacitance C varies. Change of thickness may be induced by the pressure applied by the patient on the insole while walking or exercising.

Such an insole enables measurement of the plantar pressure distribution versus time, leading to the dynamic measurement of the parameters of gait. For a precise temporal measurement of the dynamic parameters, the variation of the pressure measured by each capacitive cell must be compared to those of the other cells with a high temporal precision. Using the method 100 is advantageous because it allows to compare the internal time of each sensor and to measure the clock drift between the sensors. The timestamped data could then be synchronized to determine plantar pressure distribution versus time with high precision.

Another example is the stride synchronization. In this example, the devices are a pair of insoles. Each insole comprises capacitive cells for the pressure measurement. For a precise temporal measure of the parameters of the gait cycle, the timestamped data of the capacitive cells of each insole must be compared with a high temporal precision, below 5 ms. Using the method 100 is advantageous because it allows to save timing data for capacitive cells during a long period of time for an upcoming comparison and measure of the clock drift between the sensors of the two insoles. The timestamped data are then synchronized to determine the variation of pressure distribution versus time between the two feet with high precision and allowing to determine heel strike and toe-off events for both feet along the same time reference.

Another example is the computation of the double support time. The double support occurs during the gait when both feet are in contact with the ground simultaneously: simultaneity has to be established precisely. The double support time is the sum of the times elapsed during two periods of double support in the gait cycle. As for the previous example, using the method 100 is advantageous to precisely measure the time range when both feet are in contact with the ground. Indeed, the timestamped data saved during the method 100 could then be synchronized to determine the double support time with high precision, whereas non synchronized data would lead to a wrong estimate of double support time.

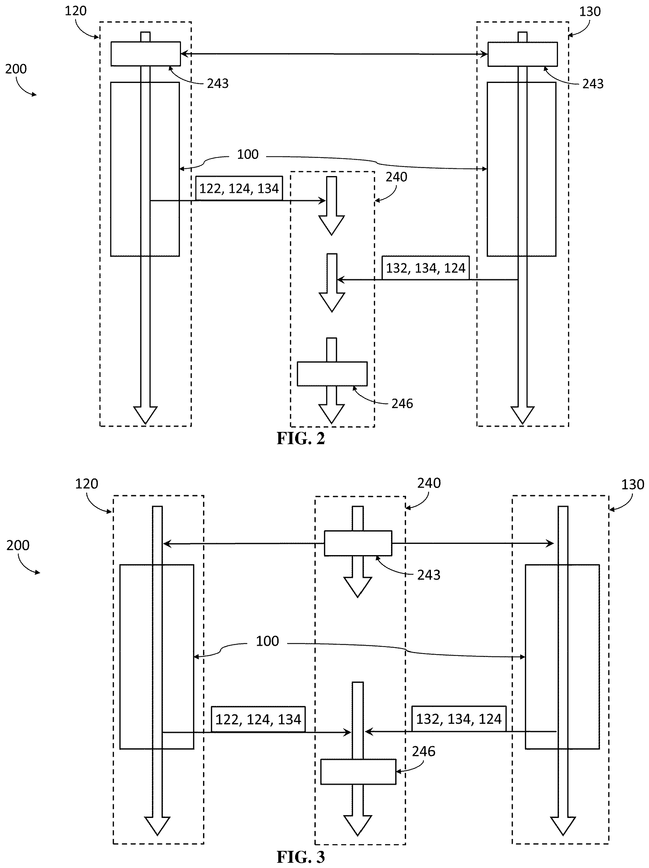

The invention also relates to a method 200 (figures 2 to 4) that aims at synchronizing timestamped data. More precisely, the method 200 aims at synchronizing timestamped data measured by at least two devices (120, 130).

At least one of the devices may be a wearable device. In an embodiment, the at least two devices (120, 130) comprise two insoles (one device per insole).

Each of the at least two devices (120, 130) may comprise at least an internal clock, a predetermined synchronization frequency (SF2, SF3), a memory, a wireless connection module and at least one sensor.

Optionally, each of the devices may also comprise an identifier. Alternatively, the method 200 may also comprise a preliminary step of assigning an identifier to each device allowing to uniquely identify each device among a plurality of other devices.

The first step 243 of the method 200 is tying the at least two devices (120, 130) to each other. As explained above, tying the devices (120, 130) allows each device to only receive data broadcasted by the device(s) to which said device is tied and to determine, for each received data, the device which broadcast said data. The tying step 243 may be performed by sending, to each device, the identifier corresponding to each other device to be tied. As long as the identifiers of the devices and the number of the devices used in the method 200 do not change, the tying step 243 needs to be performed only once. In an advantageous embodiment shown in figure 2, the tying step 243 may be performed by the devices themselves (120, 130) without any need of a central device for the control of all the device (120, 130). This is advantageous because the use of a central device implies a largest energy consumption. In an alternative embodiment, the tying step 243 is performed by means of a central device. For example, the central device may be a collector device 240 as shown in figure 3.

The second step of the method 200 is acquiring timestamped data and timing data by said tied devices (120, 130). This step is performed by means of the method 100 described above.

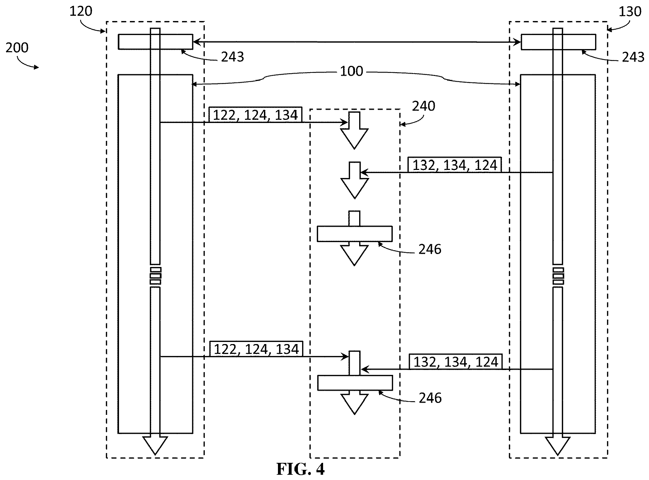

The acquired timestamped data (122, 132) and timing data (124, 134) from each device (120, 130) are then transmitted to the collector device (240). This step is preferably performed after at least one storing step (129, 139) of the method 100. Optionally, this step may be performed after the whole acquisition of the sensor data of the method 100 (as shown in figures 2 and 3). Alternatively, this step may be performed and repeated several times during the acquisition of the sensor data of the method 100 (as shown in figure 4). The transmission step may be performed simultaneously (as shown in figure 3) or asynchronously (as shown in figures 2 and 4) by the devices. The transmission method may be a wireless method such as, but not limited to, a Bluetooth low energy (BLE) system, a Wireless Fidelity (WIFI) system, an Advanced and Adaptive Network Technology (ANT), or a Zigbee protocol. Alternatively, the transmission method may be a wire method such as, but not limited to, a Bulk Only Transfer (BOT) or a USB Attached SCSI Protocol via a Universal Serial Bus (USB). Alternatively, the timestamped data (122, 132) and timing data (124, 134) may be recorded on a flash memory, such as, but not limited to, a SD card, which is then connected to the collector device (240) to transfer the data.

Finally, the method 200 comprises a step 246 of synchronizing the transmitted timestamped data (122, 132) from all devices (120, 130) in the collector device (240), using the corresponding timing data (124, 134). For example, the synchronization step 246 is performed using a linear interpolation between a pair of internal times of two devices. Optionally, this step may be performed after the each transmitting step from both devices (as shown in figure 4). Alternatively, this step may be performed after the transmission of the overall timestamped data. In an embodiment, one device (120, 130) may function as the collector device (240).

The invention may also relate to a computer program product comprising instructions which, when executed by a computer, cause the computer to carry out the method 200 as disclosed above.

The expression "computer" should not be construed to be restricted to hardware capable of executing software, and refers in a general way to a processing device, which can for example include a computer, a microprocessor, an integrated circuit, or a programmable logic device (PLD). The computer may also encompass one or more Graphics Processing Units (GPU), whether exploited for computer graphics and image processing or other functions. Additionally, the instructions and/or data enabling to perform associated and/or resulting functionalities may be stored on any processor-readable medium such as, e.g., an integrated circuit, a hard disk, a CD (Compact Disc), an optical disc such as a DVD (Digital Versatile Disc), a RAM (Random-Access Memory) or a ROM (Read-Only Memory). Instructions may be notably stored in hardware, software, firmware or in any combination thereof.

### EXAMPLES

The present invention is further illustrated by the following examples.

### Example 1: Energy consumption

The inventive method of acquiring timestamped data and timing data is performed using two insoles comprising 19 capacitive pressure cells each. The capacitive pressure cells are used for the measurement of pressure force. The predetermined synchronization frequency is the same for the two insoles and is equal to 2 hour⁻¹. The frequency of broadcasting is 5 Hz. The method of acquiring timestamped data and timing data is performed during 10 hours. The average consumption of each insole is 90 mAh during the experiment.

As a comparison, a method with a master device is realized. The same two insoles comprising 19 capacitive pressure cells each are used. The timestamped data and timing data are regularly transmitted to a master device which thus must be continuously connected to the two insoles. In this case, the master device will be one of the insoles and will be connected to the other insole. The frequency of the transmission is the same as the frequency of broadcasting of the method of the invention, i.e., 5 Hz. The known method is also performed during 10 hours. In this comparative method, the insole having the role of master device has an average consumption of 111 mAh during the experiment.

The inventive method thus leads to an energy saving of 20 mAh (20%). Considering a standard battery of 1 Ah, the autonomy difference is over 2 hours, which is a significant improvement of autonomy.

### Example 2: Measure of the clock drifting ― Reliability of synchronization method

The method of synchronizing timestamped data is used to characterized the clock drifting. Said method is performed using two devices comprising one capacitive pressure cell each. The two sensors are tied at a time t₀ and start measuring the pressure using the capacitive pressure cells. This means that, at the time to, the internal clocks of the two devices are set to the same time (0 milliseconds difference). After 10 hours (ti), the first device transmits its sensor data and timing data to a smartphone acting as collector device. After 15 hours (t2), the second device transmits its sensor data and timing data to the collector device. After 21.5 hours (t₃), the two devices transmit their sensor data and timing data to the collector device.

The clock drift between the two devices is computed for the times t₁, t₂ and t₃. Using the timing data of each device at the times t₁, t₂ and t₃, we can determine the clock drifting between the devices. At t₁, the clock drifting is 367 milliseconds. At t₂, the clock drifting is 533 milliseconds. At t₃, the clock drifting is 779 milliseconds.

Considering the step duration, which is approximately 500 milliseconds, the clock drifting is large enough to invert two successive left and right steps after only few hours.

With the synchronization method of the invention, timing data of devices are brought in correspondence at their synchronization frequencies, 2 hour⁻¹ as in example 1. Thus, every 30 minutes, timestamped data of each device is brought in correspondence with timestamped data of the other devices, with a drift lower than 20 ms. After synchronizing the timestamped data, the normal alternance of left and right step is kept for the whole duration of the experiment.

### Example 3: A system comprising several types of devices/sensors

The method of acquiring timestamped data and timing data is performed using two insoles (devices 2 and 3) and a strap (device 1) fitted to the chest of a user with an accelerometer. Each insole comprises a plantar pressure sensor (19 capacitive pressure cells), an accelerometer and a gyroscope. The system can be used in the cases of the analysis of a run, the analysis of the posture, or the fall detection. The three devices are tied at a time t₀ and start measuring data. This means that, at the time t₀, the internal clocks of the three devices are set to the same time (0 milliseconds difference). In order to simplify the system, each device is tied to only one device: device 1 is tied to device 2, device 2 is tied to device 3 and device 3 is tied to device 1. The synchronization frequency is the same for the three devices: 2 hour⁻¹ (timing data acquired every 30 minutes by each device).

At t₂= t₀ + 2 hours, the three devices are placed on a board and the board is manually moved up and down, so the devices have the same movement. Hence, there is a physical synchronization point which is the accelerometer data on Z-axis.

At t₃= t₀ + 16 hours, the process is repeated with device 1 and device 3.

At t₄= t₀ + 17.5 hours, the process is repeated with device 1 and device 2.

After 19 hours (ti), the three devices transmit their sensor data and timing data (37 or 38 timing data, acquired every 30 minutes by each device) to the collector device.

First, the clock drift is computed based on the timing data, i.e. by a sum of clock differences stored in all timing data. After 19 h, the computed clock drift between device 1 and device 2 is t_{drift1} = -683 milliseconds. Between device 2 and device 3, it is t_{drift2} = - 558 milliseconds. Between device 3 and device 1, it is t_{drift3} = 1292 milliseconds. In a perfect system, one should have t_{drift3} = - (t_{drift2} + t_{drift1}). The difference of 5 milliseconds comes from the uncertainty of the measure of timing data.

As the timing data have been stored every 30 minutes for each device, it is possible to synchronize the sensor data of the three devices with a great precision.

Second, the clock drift is computed based on the physical synchronization point provided by accelerometer data. At time t₃= t₀ + 16 hours, device 1 has the clock value 57950963 ms and device 2 has the clock value 57951813 ms. The clock drift between the two devices is -850 ms. Thanks to the synchronized sensor data obtained above, the clock drift between device 1 and device 2 at t₃ (t₃ being spotted with accelerometer data of device 3) is known and equal to -848 ms. A difference of 2 ms is observed between the two measurements, demonstrating the precision of the method.

At time t₄= t₀ + 17.5 hours, device 1 has the clock value 63157373 milliseconds and device 2 has the clock value 63158073 milliseconds. The clock drift between the two devices is -701 milliseconds. Thanks to the synchronized sensor data obtained above, the clock drift between device 1 and device 2 at t₄ is known and equal to -704 milliseconds. Again, the 3 ms difference demonstrates the high accuracy of the method.

The two synchronizations above show that it is possible to resynchronize sensors data with a few milliseconds approximation instead of hundreds of milliseconds thanks to the method of acquiring timestamped data and timing data.

Last, this example demonstrates that several devices - more than two - can be used in the method.

## Claims

1. A method of acquiring timestamped data and timing data (100) by at least two devices (120, 130) wherein:
- The devices (120, 130) are tied;
- Each device (120, 130) comprises an internal clock, an identifier, a predetermined synchronization frequency (SF2, SF3), a memory, a wireless connection module and at least one sensor;
- Each device (120, 130) continuously acquires sensor data (122, 132) and, through its wireless connection module, continuously broadcasts its internal clock data and its identifier (124, 134);
- At its predetermined synchronization frequency (SF2, SF3), each device (120, 130) acquires a timing data, said acquisition by each device comprising the steps of:
i. Scanning (126, 136) through its wireless connection module to receive internal clock data and identifier (134, 124) broadcasted by at least one of the other devices; and
ii. Storing (129, 139) in its memory the timing data comprising its own internal clock data (124, 134) as well as the internal clock data and identifier received (134, 124).

2. The method (100) according to claim **1,** wherein continuous broadcasting is periodic and the frequency of broadcasting is ranging from 1 Hz to 25 Hz.

3. The method (100) according to claim **1** or **2,** wherein each device (120, 130) comprises the same predetermined synchronization frequency (SF2, SF3), the timing data being acquired asynchronously by each device.

4. The method (100) according to any one of claims **1** to **3,** wherein the predetermined synchronization frequency (SF2, SF3) is larger than or equal to A/20, where A is the largest internal clock drifting rate of all devices.

5. The method (100) according to any one of claims **1** to **4,** wherein the predetermined synchronization frequency (SF2, SF3) ranges between 1 to 6 hour⁻¹.

6. The method (100) according to any one of claims **2** to **5,** wherein duration of the scanning step (126, 136) of each device is larger than or equal to the period of broadcasting of at least one of the other devices, preferably the duration of the scanning step (126, 136) is 30 seconds.

7. The method (100) according to any one of claims **2** to **6,** wherein the scanning step (126, 136) comprises at least one scan window (127, 137), the duration of each scan window (127, 137) being larger than or equal to the period of broadcasting of at least one of the other devices, and each scan window (127, 137) being successively performed until at least one of the other devices is found.

8. The method (100) according to any one of claims **1** to **7,** wherein the wireless connection module is a Bluetooth low energy system.

9. The method (100) according to any one of claims **1** to **8,** wherein the at least two devices (120, 130) comprise at least one of: an accelerometer, a pressure sensor, a magnetometer, a gyroscope, an electrocardiogram sensor, an oximeter, an electroencephalogram sensor, a temperature sensor, a force sensor, an arterial blood flow sensor, an atmospheric pressure sensor, a plantar pressure sensor, a glucose level sensor, a posture sensor, a balance sensor, a heartbeat sensor and/or a telemetry sensor.

10. The method (100) according to any one of claims **1** to **9,** wherein the acquisition of sensor data (122, 132) lasts at least 10 hours, preferably 24 hours, more preferably at least 48 hours.

11. The method (100) according to any one of claims **1** to **10,** wherein the devices (120, 130) are wearable devices.

12. The method (100) according to any one of claims **1** to **11,** wherein the at least two devices (120, 130) comprise two insoles.

13. A method of synchronizing timestamped data (200), the method comprising:
- Tying (243) at least two devices (120, 130) to each other;
- Acquiring timestamped data and timing data by said tied devices (120, 130) according to any one of claim **1** to **12;**
- Transmitting timestamped data (122, 132) and timing data (124, 134) from each device (120, 130) to a collector device (240); and
- Synchronizing (246) the transmitted timestamped data (122, 132) from all devices (120, 130) in the collector device (240), using timing data (124, 134) of all devices.

14. The method (200) according to claim **13,** wherein tying (243) the at least two devices (120, 130) to each other is performed by sending, to each device, an identifier corresponding to each of the other device, the identifier uniquely identifying each device.

15. The method (200) according to claim **13** or **14,** further comprising, before tying (243) the at least two devices (120, 130) to each other, assigning a unique identifier to each device.
